# EUROPEAN PATENT APPLICATION

(11) **EP 4 366 036 A1**
(43) Date of publication of application: **08.05.2024**
(21) Application number: 22832811.8
(22) Date of filing: 14.06.2022
(51) Int. Cl.: H01M 10/643, H01M 10/613, H01M 10/6551, H01M 10/6554

(54) **BATTERY MODULE**

(30) Priority: 29.06.2021 JP 2021107855
(71) Applicant: Panasonic Energy Co., Ltd., Osaka 570-8511 (JP)
(72) Inventor: KOHARA Hikaru, Kadoma-shi, Osaka 571-0057 (JP)
(74) Representative: Novagraaf International SA
(86) International application number: PCT/JP2022/023783
(87) International publication number: WO 2023/276656

(57) **Abstract**

A battery module includes a battery assembly (4) including battery blocks (3) including cylindrical batteries (1) having bottom surfaces (11a) flush with respective planes, the battery blocks (3) being connected to one another in an axial direction of the cylindrical batteries (1); and a cooling plate (5) configured to cool the cylindrical batteries (1). The battery blocks (3) have: respective cooling surfaces (3A) constituted by respective one end surfaces of the battery blocks (3); and respective discharge surfaces (3B) constituted by respective opposite end surfaces of the battery blocks (3). The cylindrical batteries (1) include respective discharge valves having respective openings (13) at respective discharge surfaces (3B) of the battery blocks (3). The battery assembly (4) includes a duct gap (6) for discharge between adjoining battery blocks (3) such that a cooling surface (3A) of one adjoining battery block (3) faces, across the duct gap (6), a discharge surface (3B) of another adjoining battery block (3). The cooling plate (5) has an L-shape including a heat-absorption plate portion (5A) and a heat-dissipation plate portion (5B) connected perpendicularly and unitarily to one another. The heat-absorption plate portion (5A) is disposed on and thermally coupled to the cooling surface (3A) of one adjoining battery block (3). The heat-dissipation plate portion (5B) is disposed on an outer surface of the battery assembly (4). The duct gap (6) is provided between the heat-absorption plate portion (5A) and the discharge surface (3B) of another adjoining battery block.

## Description

### TECHNICAL FIELD

The present invention relates to a battery module including cylindrical batteries and, more particularly, to a battery module including cylindrical batteries to be efficiently cooled.

### BACKGROUND ART

A battery module including cylindrical batteries importantly maintains battery temperatures within a predetermined range by efficient dissipation of heat energy from the cylindrical batteries which generate heat during charging and discharging thereof. A battery module particularly including a lot of cylindrical batteries connected in series or parallel to have a large output capacity importantly reduces temperature differences through uniform cooling of the cylindrical batteries. This is because aberrant temperature rises or irregularities of the cylindrical batteries may cause the batteries to have deteriorated electrical characteristics and shortened lives.

A battery module to dissipate heat energy of cylindrical batteries is developed (refer to PTL 1). As illustrated in FIG. 11, this battery module includes right and left battery modules 90A and 90B, each composed of a lot of cylindrical batteries 91 arranged widthwise. Heat-conductive frames 92 are placed on right and left battery modules 90. Cooling device 93 is sandwiched between right heat-conductive frame 92A and left heat-conductive frame 92B.

### CITATION LIST

### Patent Literature

PTL 1: Japanese Patent Laid-Open Publication No. 2020-530936

### SUMMARY OF THE INVENTION

### Problem To Be Solved

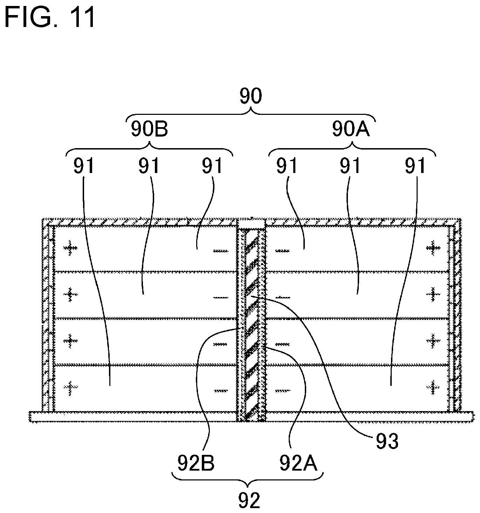

In the battery module shown FIG. 11, the pair of heat-conductive frames 92 conduct and dissipate heat energy of right and left battery modules 90, and cooling device 93 sandwiched between the pair of heat-conductive frames 92 cools both the heat-conductive frames 92. This battery module disadvantageously disables cooling device 93 to dissipate heat at its surfaces because cooling device 93 is placed on right heat-conductive frame 92A and left heat-conductive frame 92B at both surfaces to cool heat-conductive frames 92. This battery module disadvantageously requires cooling device 93 to have great cooling capacity because single cooling device 3 cools heat-conductive frames 92 at both surfaces.

The present invention may aim to solve the above disadvantages, and an object of the present invention is to provide a battery module that allows for efficient cooling of a lot of cylindrical batteries.

### Solution To Problem

A battery module includes: a battery assembly including a plurality of battery blocks including respective groups of cylindrical batteries having bottom surfaces flush with respective planes, the plurality of battery blocks being connected to one another in an axial direction of each of the cylindrical batteries; and cooling plates configured to cool the respective groups of the cylindrical batteries of the plurality of battery blocks. The plurality of battery blocks have: respective cooling surfaces constituted by respective one end surfaces of the plurality of battery blocks, the bottom surfaces of the respective groups of the cylindrical batteries being flush with the respective planes on the respective one end surfaces of the plurality of battery blocks; and respective discharge surfaces constituted by respective opposite end surfaces of the plurality of battery blocks, the respective groups of the cylindrical batteries including respective discharge valves having respective openings at the respective opposite end surfaces of the plurality of battery blocks. The battery assembly includes a duct gap for discharge between adjoining battery blocks out of the plurality of battery blocks such that a cooling surface of one of the adjoining battery blocks out of the respective cooling surfaces of the plurality of battery blocks faces, across the duct gap, a discharge surface of another of the adjoining battery blocks out of the respective discharge surfaces of the plurality of battery blocks. The cooling plates have respective L-shapes including respective heat-absorption plate portions and respective heat-dissipation plate portions connected perpendicularly and unitarily to the respective heat-absorption plate portions. One of the respective heat-absorption plate portions of one of the cooling plates is disposed on and thermally coupled to the cooling surface of the one of the adjoining battery blocks. The respective heat-dissipation plate portions are disposed on an outer surface of the battery assembly. A gap functioning as the duct gap is provided between the one of the respective heat-absorption plate portions and the discharge surface of the another of the adjoining battery blocks of the battery assembly.

### Effect of Invention

The above battery module allows a lot of cylindrical batteries to be cooled and prevents adverse influence of temperature rises of the cylindrical batteries.

### BRIEF DESCRIPTION OF THE DRAWINGS

FIG. 1 is a perspective view of a battery module according to an exemplary embodiment of the present invention.
FIG. 2 is a plan view of the battery module illustrated in FIG. 1.
FIG. 3 is a vertical sectional view of the battery module along line III-III shown in FIG. 2.
FIG. 4 is an exploded perspective view of the battery module when viewed from the left of FIG. 1.
FIG. 5 is an exploded perspective view of the battery module when viewed from the bottom of FIG. 1.
FIG. 6 is an exploded perspective view of a battery assembly of the battery module illustrated in FIG. 1.
FIG. 7 is a bottom perspective view of the battery assembly illustrated in FIG. 6.
FIG. 8 is an exploded perspective view of a battery block.
FIG. 9 is an exploded perspective view of the battery block when viewed from the left of FIG. 8.
FIG. 10 is an enlarged sectional view of the battery block which are stacked.
FIG. 11 is a vertical cross-sectional view of a conventional battery module.

### DESCRIPTION OF EMBODIMENT

A battery module according to an aspect of the present invention includes: a battery assembly including a plurality of battery blocks including respective groups of cylindrical batteries having bottom surfaces flush with respective planes, the plurality of battery blocks being connected to one another in an axial direction of each of the cylindrical batteries; and cooling plates configured to cool the respective groups of the cylindrical batteries of the plurality of battery blocks. The plurality of battery blocks have: respective cooling surfaces constituted by respective one end surfaces of the plurality of battery blocks, the bottom surfaces of the respective groups of the cylindrical batteries being flush with the respective planes on the respective one end surfaces of the plurality of battery blocks; and respective discharge surfaces constituted by respective opposite end surfaces of the plurality of battery blocks, the respective groups of the cylindrical batteries including respective discharge valves having respective openings at the respective opposite end surfaces of the plurality of battery blocks. The battery assembly includes a duct gap for discharge between adjoining battery blocks out of the plurality of battery blocks such that a cooling surface of one of the adjoining battery blocks out of the respective cooling surfaces of the plurality of battery blocks faces, across the duct gap, a discharge surface of another of the adjoining battery blocks out of the respective discharge surfaces of the plurality of battery blocks. The cooling plates have respective L-shapes including respective heat-absorption plate portions and respective heat-dissipation plate portions connected perpendicularly and unitarily to the respective heat-absorption plate portions. One of the respective heat-absorption plate portions of one of the cooling plates is disposed on and thermally coupled to the cooling surface of the one of the adjoining battery blocks. The respective heat-dissipation plate portions are disposed on an outer surface of the battery assembly. A gap functioning as the duct gap is provided between the one of the respective heat-absorption plate portions and the discharge surface of the another of the adjoining battery blocks of the battery assembly.

The above battery module is configured to advantageously cool these cylindrical batteries efficiently. In the above battery module, the battery blocks are placed on and thermally coupled to respective cooling plates. The battery module having this configuration advantageously eliminates to thermally couple two battery blocks to opposite surfaces of a single cooling plate, unlike the conventional battery module. The battery module ensures that each cooling plate is thermally coupled to a corresponding one of the battery blocks to efficiently cool the cylindrical batteries without relative misalignment of the adjoining battery blocks to interfere the thermal coupling of the cooling plate. Since the above battery module particularly does not allow the relative misalignment of the adjoining battery blocks to interfere the thermal coupling, the above battery module maintains the preferable thermal coupling between the cylindrical batteries and the cooling plate even when the relative misalignment of the adjoining battery block occurs during long-term use. Therefore, the battery module is advantageous in restraining battery degradation and deterioration of electrical characteristics due to temperature rises by stably cooling the cylindrical batteries with the cooling plates over an extended period.

Furthermore, the above battery module advantageously allows the cooling plate to prevent thermal runaway from being induced since the duct gap is provided between the discharge surface of the battery block and the cooling plate for the cooling plate to intercept the hot and high-pressure discharge ejected from the opened discharge valve. Since the above battery module particularly includes the cooling plate as a dual-purpose plate to prevent the thermal runaway from being induced, the above battery module advantageously enables the induction of the thermal runaway to be prevented with the simple configuration, which does not include a dedicated heat-resistant plate for preventing the induction of the thermal runaway.

In a battery module according to another aspect of the present invention, the battery assembly includes a plurality of duct gaps including the duct gap of the battery assembly. The cooling plates are disposed on the respective cooling surfaces in the plurality of duct gaps, the respective heat-dissipation plate portions of the cooling plates being flush with one another.

The above battery module advantageously more efficiently cools the cylindrical batteries with the plate-shaped cooling device thermally coupled to the heat-dissipation plate portions that are flush with one another.

A battery module according to another aspect of the present invention further includes: a lead plate electrically connected to bottom surfaces of one group of cylindrical batteries out of the respective groups of the cylindrical batteries of the plurality of battery blocks; and an insulating heat-conductive sheet is disposed between the lead plate and the one of the respective heat-absorption plate portions. The one of the respective heat-absorption plate portions is thermally coupled to the bottom surfaces of the one group of the cylindrical batteries via the insulating heat-conductive sheet and the lead plate.

Since the cooling plate is placed on via the insulating heat-conductive sheet, the above battery module advantageously prevents a short circuit that might be caused by the cooling plate, which is electrically conductive, while using the cooling plate.

In a battery module according to still another aspect of the present invention, the plurality of battery blocks include respective battery holders positioning the respective groups of the cylindrical batteries of the plurality of battery blocks such that the respective groups of the cylindrical batteries are parallel to one another. The duct gap of the battery assembly is provided between the battery blocks through one of the respective battery holders.

The battery holder, which arranges the cylindrical batteries in place, provides the duct gap between the adjoining battery blocks by including projections or others in its configuration. Therefore, the above battery module advantageously maintains the battery holder to allow the duct gap to have an exact separation.

A battery module according to still another aspect of the present invention further includes an active cooling device thermally coupled to the respective heat-dissipation plate portions.

Since the active cooling device efficiently cools each cooling plate, the above battery module advantageously cools the cylindrical batteries more efficiently.

A battery module according to still another aspect of the present invention further includes an outer case accommodating the battery assembly therein. The outer case includes: a pair of end-surface plates disposed at opposite end surfaces of the battery assembly, respectively; side plates disposed at respective opposite sides of the battery assembly, each of the side plates being connected to corresponding one sides of both sides of the end-surface plates; and a bottom plate disposed on a bottom surface of the battery assembly. The bottom plate has an exposure opening therein for the heat-dissipation plate portion. The heat-dissipation plate portion is exposed through the exposure opening.

Since the heat-dissipation plate portion of the cooling plate is placed in the exposure opening of the bottom plate, the above battery module efficiently cools the cylindrical batteries to be performed by the cooling plate while the bottom plate serves as a closed bottom surface of the outer case.

In a battery module according to still another aspect of the present invention, the plurality of battery blocks include respective battery holders positioning the respective groups of the cylindrical batteries such that the respective groups of the cylindrical batteries are parallel to one another. The side plates are fixed to the respective battery holders. The side plates allow the adjoining battery blocks to be arranged in place. Therefore, the above battery module advantageously allows the side plates to maintain the duct gap between the adjoining battery blocks as a fixed separation.

In a battery module according to still another aspect of the present invention, the plurality of battery blocks include respective battery holders positioning the respective groups of the cylindrical batteries such that the respective groups of the cylindrical batteries are parallel to one another. the cooling plates are fixed to the respective battery holders. The above battery module advantageously allows the battery assembly with the bottom plates and the cooling plates to be assembled efficiently since the battery blocks with the secured cooling plates are assembled. The module advantageously maintains reliably the thermal coupling between the cooling plate and the cylindrical batteries.

In a battery module according to another aspect of the present invention, each of the battery blocks includes a plurality of parallel blocks each including plural cylindrical batteries of a corresponding one group of the respective groups of the cylindrical batteries such that the plural cylindrical batteries are connected in parallel to one another, the plurality of parallel blocks being connected in series to one another.

The above battery module advantageously increases total output voltage while not increasing the number of the battery blocks connected in series.

In a battery module according to still another aspect of the present invention, the adjoining battery blocks of the battery assembly are connected in series to each other.

The above battery module may allow its output voltage to be optimized based on the number of battery blocks connected in series.

With reference to the drawings, a detailed description is hereinafter provided of the present invention. While terms that indicate specific directions and positions (such as "top", "bottom", and other terms including these terms) are used as needed in the following description, these terms are used for facilitating understanding of the invention with reference to the drawings, and meanings of these terms are not restrictive of the technical scope of the present invention. The same reference signs appearing in plural drawings represent identical or equivalent parts or components.

An exemplary embodiment described below is an example embodying the technical concept of the present invention and is not restrictive of the present invention. Dimensions, materials, shapes, relative arrangement, and others of components described below, unless specifically stated, are intended for an illustration purpose, not limiting the scope of the present invention. Contents described in one exemplary embodiment or example are also applicable to other exemplary embodiments or examples. The drawings may exaggeratively illustrate sizes, relative positions, and others of the components for clarity of descriptions.

### Exemplary Embodiment 1

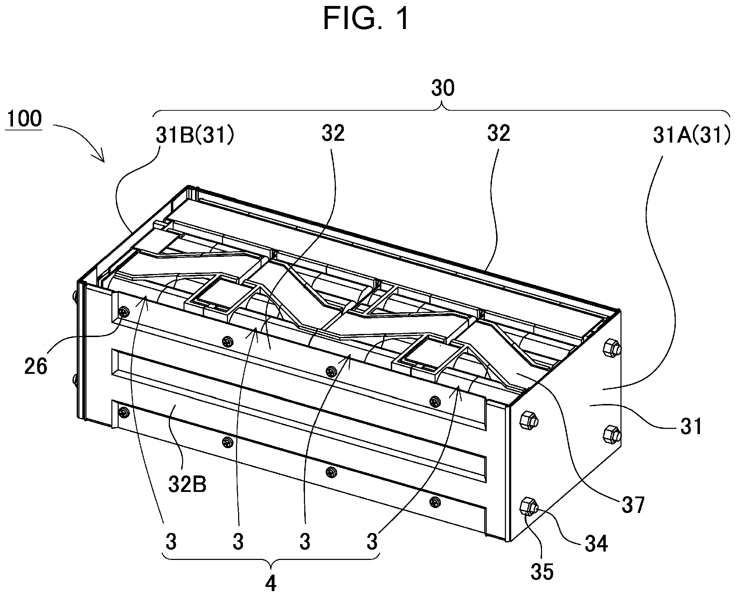

Battery module 100 illustrated in FIGS. 1-10 includes a battery assembly 4 including a plurality of battery blocks 3 including respective groups of cylindrical batteries 1 having bottom surfaces flush with respective planes, the plurality of battery blocks 3 being connected to one another in an axial direction of each of the cylindrical batteries 1; and cooling plates configured to cool the respective groups of the cylindrical batteries 1 of the plurality of battery blocks 3. Battery assembly 4 of battery module 100 is accommodated in outer case 30.

### Cylindrical Battery 1

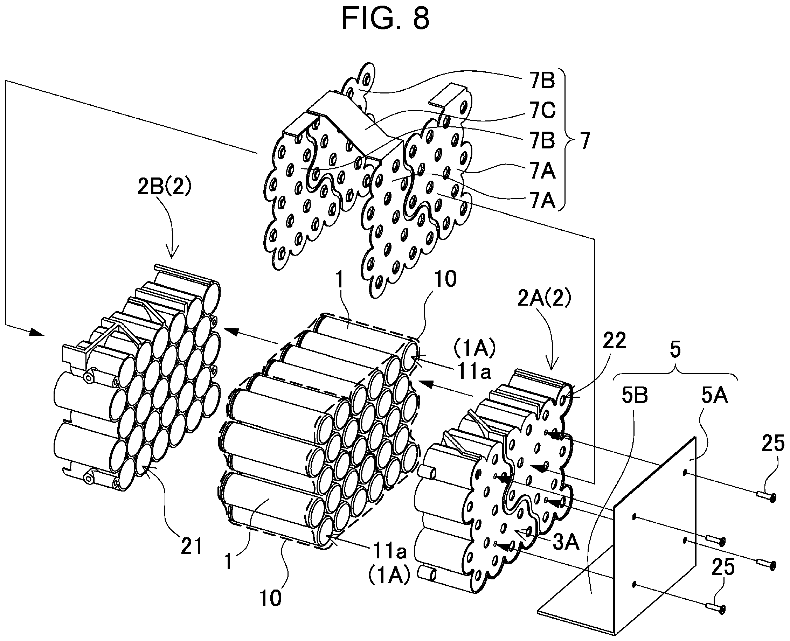

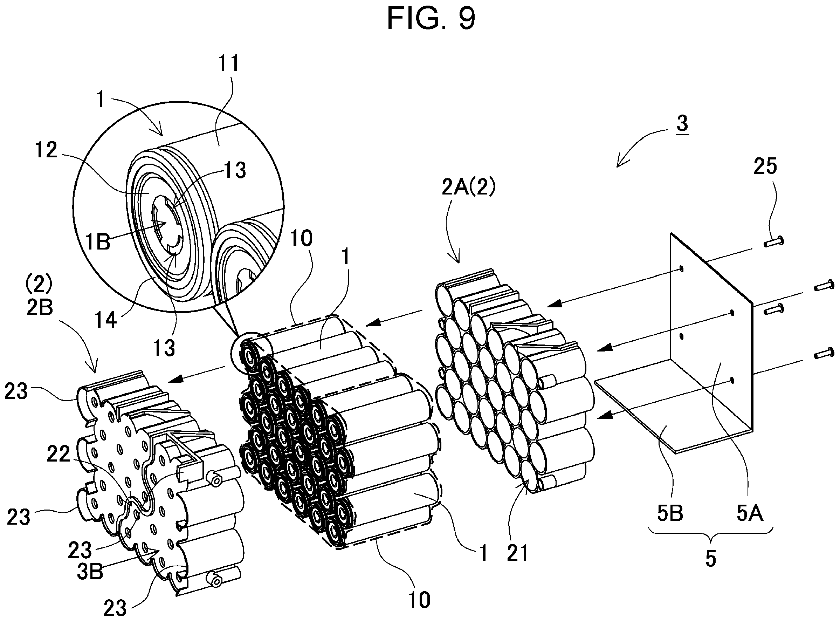

Cylindrical battery 1 illustrated in exploded perspective views of FIGS. 8 and 9 includes outer package 11 having an opening and sealing plate 12 closing the opening of outer package 11. Cylindrical battery 1 has discharge surface 1B where a discharge valve (not illustrated ) is provided and where sealing plate 12 is disposed; and cooling surface 1A serving as bottom surface 11a of outer package 11. Cylindrical battery 1 may have sealing plate 12 as a positive electrode and bottom surface 11a as a negative electrode, or vice versa. Metal sheets are used for outer package 11 and sealing plate 12 of cylindrical battery 1. Outer package 11 is made by pressing the metal sheet into a tubular shape with a bottom. Sealing plate 12 includes the discharge valve. Sealing plate 12 may include a protruding electrode at a center thereof. The protruding electrode may unitarily include the discharge valve. Outer package 11 unitarily includes electrodes (not illustrated) and is filled with an electrolyte. An opening border of outer package 11 is crimped along an outer peripheral edge of sealing plate 12 so that the outer peripheral edge of sealing plate 12 is insulated and hermetically connected at the opening of outer package 11. A gasket (not illustrated) is sandwiched between sealing plate 12 and outer package 11 so as to enhance insulation and airtightness between sealing plate 12 and outer package 11. The gasket is a rubbery elastic body made of insulating material. In this configuration of cylindrical battery 1, the crimpled opening border of outer package 11 pinches sealing plate 12, forming crimp projection 14 along the outer peripheral edge of sealing plate 12.

Cylindrical battery 1 includes the discharge valve unitarily at sealing plate 12. The discharge valve is configured to open when internal pressure becomes aberrantly high. Upon opening, the discharge valve ejects discharges, such as the electrolyte and gas, inside the battery. The discharge valve has, in sealing plate 12, openings 13 through which the discharges are ejected. For example, the discharge valve includes a valve element, an elastic member made of a spring and elastically presses the valve element, and a valve seat plate having a valve hole to be closed by the valve element. The valve seat plate may be hermetically fixed to a bottom surface of the sealing plate. A space for the valve element and the elastic member of the discharge valve may be provided between the valve seat plate and the protruding electrode. In a normal state, that is to say, when the internal pressure of the battery is lower than a predetermined pressure, the discharge valve is closed in which the elastic member elastically presses the valve element against the valve hole of the valve seat plate, thereby hermetically closing the valve hole. When the pressure inside the battery becomes higher than the predetermined pressure, the valve element is pressed by the internal pressure of the battery and opens the valve hole. The discharge valve is thus opened. This configuration allows the electrolyte and the gas inside the battery to be discharged through openings 13 in sealing plate 12. Sealing plate 12 has plural openings 13 therein around its center. The discharge valve is not limited to the above configuration and may adopt any other configuration in which the valve is opened when the internal pressure of the battery becomes higher than the predetermined pressure.

Usable examples of cylindrical battery 1 include a lithium-ion battery called "18650" and a lithium-ion battery called "21700". However, cylindrical battery 1 of the present invention is not limited to the above lithium-ion batteries. Since secondary batteries with external forms and characteristics that are optimal for applications will be developed, currently used secondary batteries and secondary batteries to be developed in the future will also be usable as cylindrical batteries 1.

### Battery Block 3

Battery block 3 includes cylindrical batteries 1 arranged in parallel to one another in plural rows and columns. Battery block 3 has one end surface as cooling face 3A and an opposite end surface as discharge face 3B. Bottom surfaces 11a of cylindrical batteries 1 are flush with one another on cooling surface 3A. Sealing plates 12 of cylindrical batteries 1 are arranged on discharge surface 3B. The discharges from the discharge valve of sealing plate 12 are discharged from discharge surface 3B. Cooling face 3A is where cylindrical batteries 1 are cooled from bottom surfaces 11a, while discharge face 3B is where openings 13 of the discharge valves of cylindrical batteries 1 are arranged.

### Lead Plate 7

Battery block 3 includes lead plates 7 electrically connected to opposite ends of each cylindrical battery 1, respectively. Lead plate 7 may be electrically connected to the end surface of cylindrical battery 1 preferably by, e.g., welding. Lead plates 7 connected to the opposite ends of each cylindrical battery 1 connects adjoining cylindrical batteries 1 in parallel to one another. Lead plates 7 include bottom-surface connection lead plates 7A connected to bottom surfaces 11a of cylindrical batteries 1 and sealing-plate connection lead plates 7B connected to sealing plates 12 of cylindrical batteries 1. In FIG. 8, cylindrical batteries 1 of battery block 3 as a whole are divided into two parallel blocks 10. Bottom-surface connection lead plates 7A, which are two divided plates, and sealing-plate connection lead plates 7B, which are two divided plates, divide cylindrical batteries 1 as a whole into two parallel blocks 10. In order to divide cylindrical batteries 1 as a whole into two parallel blocks 10, lead plates 7 include two divided bottom-surface connection lead plates 7A and two divided sealing-plate connection lead plates 7B. Divided lead plates 7 connect cylindrical batteries 1 of parallel blocks 10 in parallel to one another. Two parallel blocks 10 are connected in series to one another with series-connection lead plate 7C. Plural parallel blocks 10 connected in series to one another allow battery block 3 to output a high voltage. Plural cylindrical batteries 1 connected in parallel to one another constituting parallel blocks 10 allow battery block 3 to output a large current. Since the number of parallel blocks 10 connected in series allows the output voltage of battery block 3 to be an integer multiple of an output voltage of cylindrical battery 1, battery block 3 with the adjusted number of parallel blocks 10 connected in series outputs the adjusted voltage.

### Battery Holder

Battery block 3 includes battery holder 2 that arranges cylindrical batteries 1 in parallel to one another. Battery holder 2 is formed by molding an insulating plastic material. As illustrated in FIGS. 8 and 9, battery holder 2 includes cylindrical portions 21 each of which extends along a corresponding one of outer peripheral surfaces of cylindrical batteries 1 so as to holding cylindrical batteries 1 in parallel to one another. Battery holder 2 has a shape divided at midsections of cylindrical portions 21. Battery holder 2 is composed of two holder units 2A and 2B.

Holder units 2A and 2B has shapes tapered such that an inner diameter of each cylindrical portion 21 increases toward respective ends of holder units 2A and 2B. A gradient of the tapered shape of cylindrical portion 21 is about the same as a draft angle of a mold and may be, for example, 5 degrees or less and preferably 3 degrees or less. The inner diameter of cylindrical portion 21 is maximum at the midsection and gradually decreases toward opposite ends of cylindrical portion 21. Cylindrical portion 21 holds cylindrical battery 1 inserted therein, so that its minimum inner diameter may be substantially equal to or slightly greater than an outside diameter of cylindrical battery 1.

Although not illustrated, one of holder units 2A and 2B includes a fitting projection on a connection end surface thereof, and a fitting recess to fit the fitting projection is provided in an opposite connection end surface of anther another of holder units 2A and 2B. Holder units 2A and 2B may be connected to each other by fittingly connecting the fitting projection to the fitting recess.

As illustrated in FIGS. 8 and 9, cylindrical batteries 1 are inserted in cylindrical portions 21 of two divided holder units 2A and 2B to be held at their predetermined positions by battery holder 2. In other words, two divided holder units 2A and 2B are inserted over the opposite ends of each cylindrical battery 1 at each cylindrical portion 21 and are connected linearly via each cylindrical battery 1. That is, dividedly shaped holder units 2A and 2B may be connected to each other via cylindrical batteries 1 at their predetermined positions. Furthermore, cylindrical batteries 1 are held by battery holder 2 at their predetermined positions. In battery holder 2 with this configuration, since cylindrical batteries 1 are inserted in cylindrical portions 21 to be placed at predetermined positions, divided holder units 2A and 2B may be connected to each other at their predetermined positions without particular connection, such as screwing, bonding, or welding.

Battery holder 2 further includes fitting portions 22 that position and fix lead plate 7 at its predetermined position. Lead plate 7 put in the predetermined position with battery holder 2 may be positioned and electrically connected to the end surfaces of each cylindrical battery 1 by, e.g., welding. Lead plate 7 and cylindrical batteries 1 placed at the predetermined positions allow battery holder 2 to electrically connect lead plate 7 to cylindrical batteries 1 without relative misalignments.

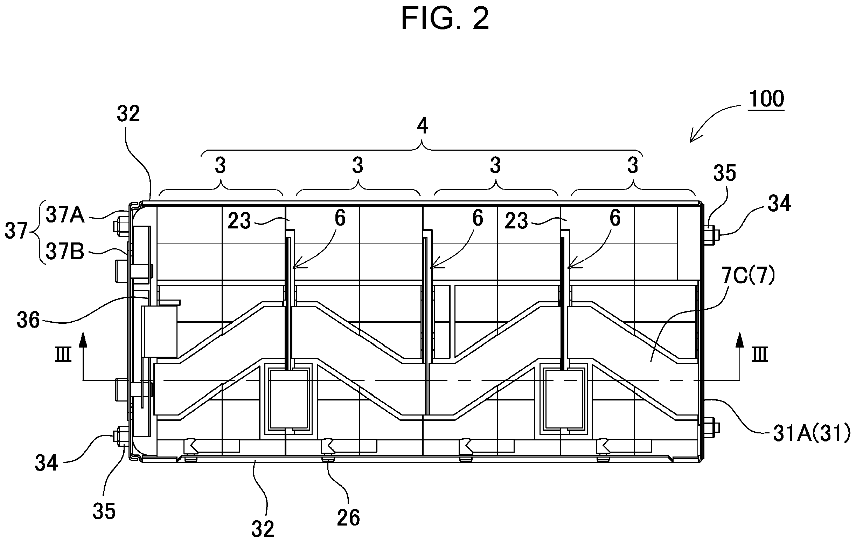

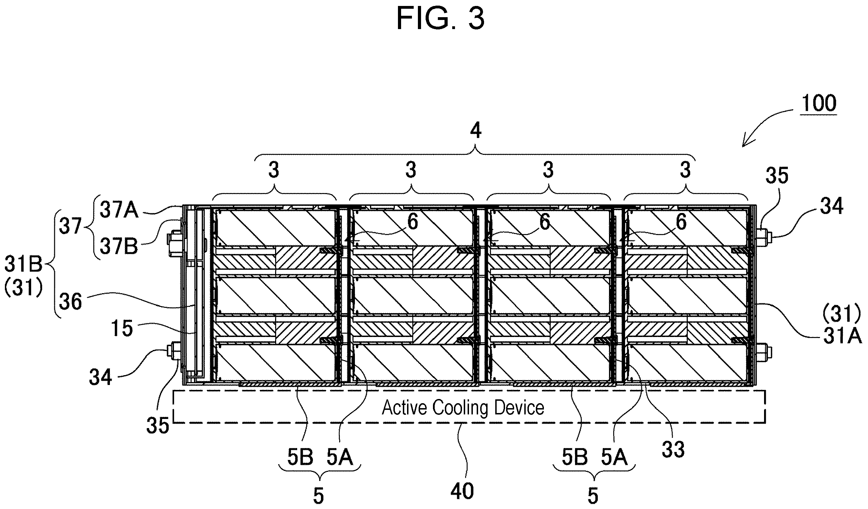

As illustrated in FIGS. 2 and 3, battery blocks 3 are connected to one another such that duct gap 6 is provided between adjoining battery blocks 3. In order to maintain duct gaps 6 with constant gaps, battery holder 2 illustrated in FIG. 9 includes gap formation ribs 23 made of plastic unitarily formed at its end surface. In FIG. 9, plural gap formation ribs 23 of battery holder 2 project from discharge surface 3B of battery block 3 toward cooling surface 3A of battery block 3 that faces discharge surface 3B. Battery holder 2 allows dimensions of duct gap 6 to be determined by an amount of projection of gap formation ribs 23. Having a well-balanced distribution of plural gap formation ribs 23, battery holder 2 forms duct gap 6 having the fixed dimensions with adjoining battery block 3. Distal ends of gap formation ribs 23 contacting the end surface of adjoining battery block 3 allows battery holder 2 to provide duct gap 6 with the predetermined gap. Although not illustrated, gap formation ribs 23 are connected to adjoining battery holder 2 by fitting, bonding, or locking, forming duct gap 6 of the predetermined dimensions with adjoining battery block 3.

### Battery Assembly 4

Battery assembly 4 includes battery blocks 3 arranged and connected to one another in an axial direction of each cylindrical battery 1. Battery assembly 4 includes duct gap 6 for the discharges between battery blocks 3 adjoining each other and has battery blocks 3 linearly aligned. Battery blocks 3 of battery assembly 4 are identical to one another in characteristics of cylindrical batteries 1, the number of cylindrical batteries 1, and the connection of cylindrical batteries 1.

In battery assembly 4, adjoining battery blocks 3 are connected to one another such that cooling surface 3A of one of adjoining battery blocks 3 faces, across duct gap 6, discharge surface 3B of another of adjoining battery blocks 3. In battery assembly 4, all cylindrical batteries 1 of each battery block 3 are arranged in parallel to one another. In battery assembly 4 illustrated in FIG. 2, adjoining battery blocks 3 are connected in series to each other to provide a high output voltage. In FIG. 2, battery assembly 4 includes four battery blocks 3 arranged linearly in the axial directions of cylindrical batteries 1. Therefore, the output voltage of the series connection of battery blocks 3 is four times as high as the voltage of battery block 3. The series connection of four battery blocks 3 each of which includes two parallel blocks 10 connected in series to each other allows battery assembly 4 to output a voltage that is eight times as high as that of cylindrical battery 1. Battery assembly 4 outputs such a high voltage by the series connection of battery blocks 3, but may also increase maximum output current by connecting battery blocks 3 inn parallel to one another. Therefore, battery assembly 4 having the series connection of battery blocks 3 is not limiting of the present invention and can have battery blocks 3 connected in series or parallel.

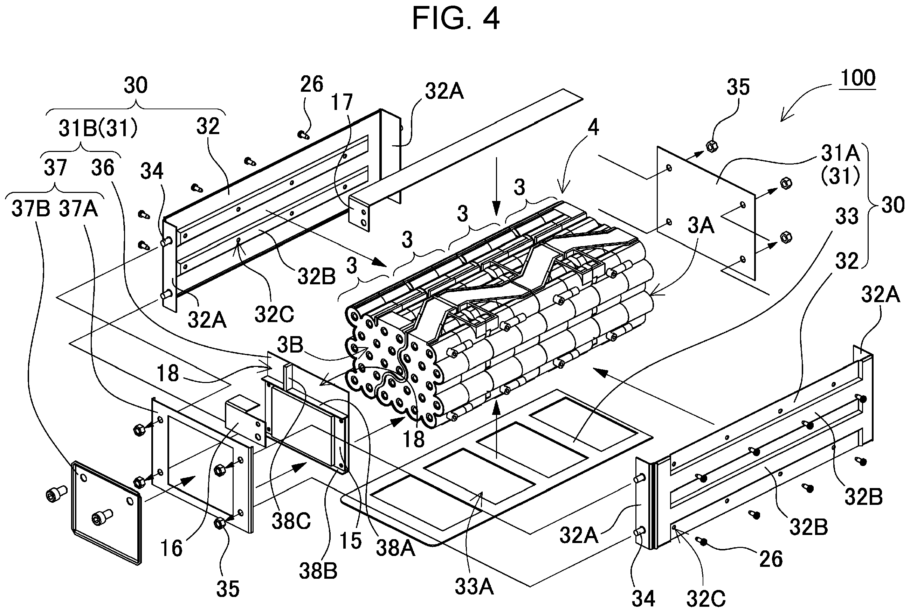

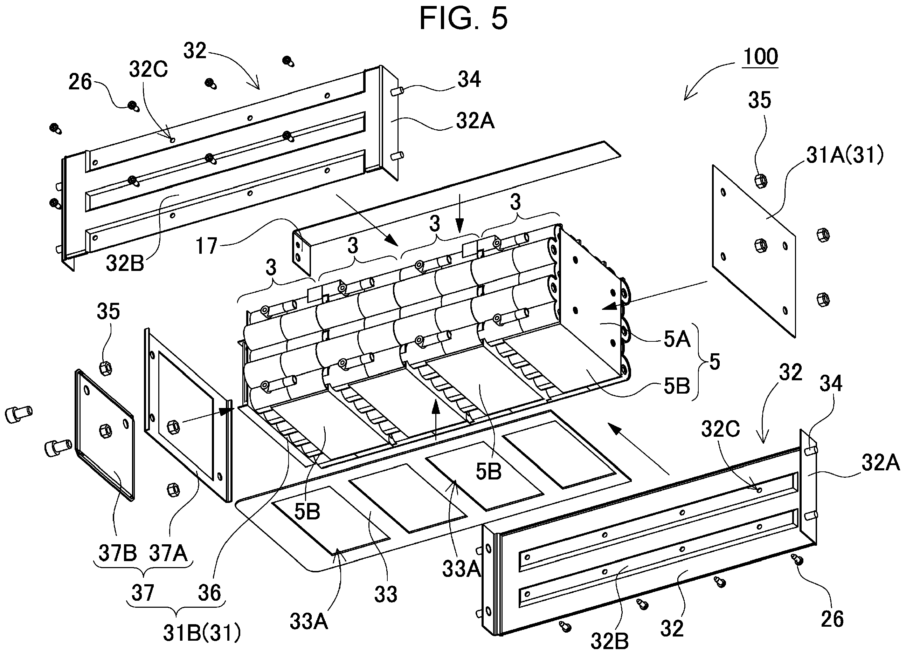

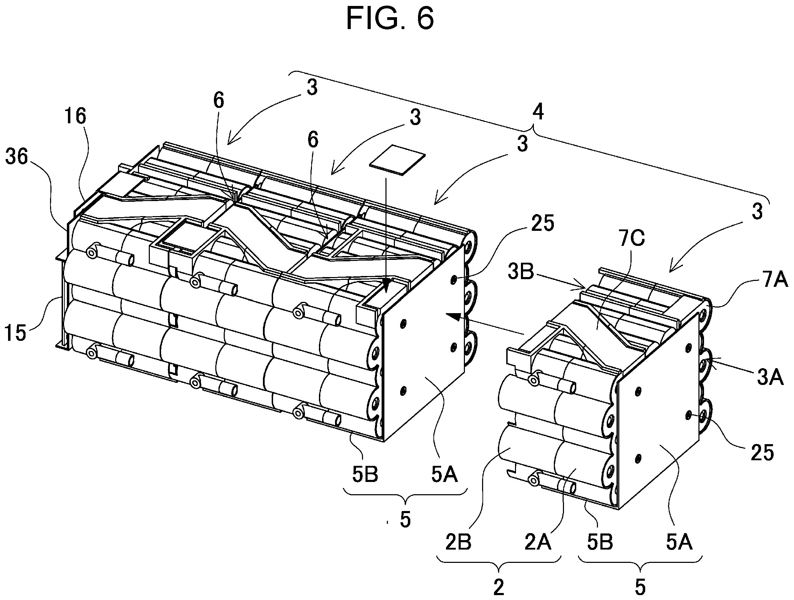

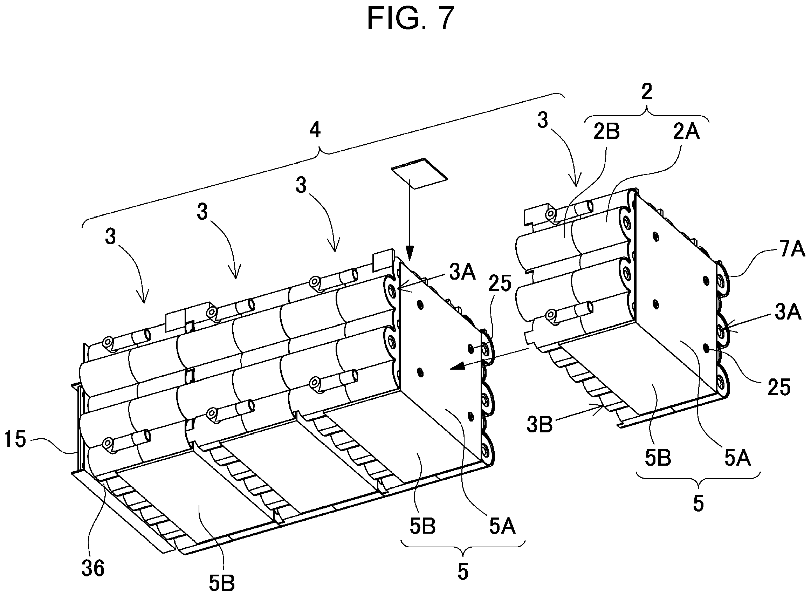

In battery assembly 4, as illustrated in FIGS. 6 and 7, battery blocks 3 with the same shape are connected to one another such that cylindrical batteries 1 are arranged linearly. In FIGS. 4 and 5, battery blocks 3 of battery assembly 4 are fixed to outer case 30, thus being arranged at their predetermined positions. However, in battery assembly 4, adjoining battery blocks 3 may be connected to each other at their predetermined positions by connecting battery holders 2 to each other. Alternatively, battery block 3 may be fixed to outer case 30 and then fixed to battery holder 2 of adjoining battery block 3 to be connected to each other at their predetermined positions.

In FIGS. 2 and 3, battery assembly 4 has four battery blocks 3 connected linearly and has three duct gaps 6 each provided between adjoining battery blocks 3. Duct gap 6 is provided between adjoining battery blocks 3. Therefore, a battery assembly including three battery blocks connected linearly to one another has two duct gaps. Five or more battery blocks may be connected linearly to one another to form a battery assembly with four or more duct gaps therein.

### Cooling Plate 5

Cooling plate 5 has high heat conductivity and has an L-shape including heat-absorption plate portion 5A and heat-dissipation plate portion 5B which is unitarily connected perpendicularly to heat-absorption plate portion 5A. Cooling plate 5 may be preferably made of metal, such as aluminum. A metal plate, such as an aluminum plate, ranging from 1 mm to 4 mm is usable. The aluminum plate as cooling plate 5 has advantages of lower cost, high heat conductivity, lightweight, and ease of processing. However, cooling plate 5 is not limited to the aluminum plate; other materials, such as graphite with high in-plane heat conductivity, that have high heat conductivity and high heat resistance are also usable.

Heat-absorption plate portion 5A of cooling plate 5 is placed on and thermally coupled to cooling surface 3A of battery block 3 while heat-dissipation plate portion 5B is disposed on an outer surface of battery assembly 4. In addition to cooling cylindrical batteries 1 from bottom surfaces 11a, cooling plate 5 protects cylindrical batteries 1 from hot and high-pressure discharges ejected from the opening discharge valve(s) to prevent thermal runaway from being induced. Upon having thermal runaway, cylindrical battery 1 has its internal pressure suddenly increase, accordingly causing the discharge valve to open and eject hot and high-pressure discharges. The ejected hot and high-pressure discharges induce thermal runaway of cylindrical batteries 1. Cooling plate 5 prevents the hot and high-pressure discharges from being blown directly against bottom surfaces 11a of cylindrical batteries 1 on the opposite side, thereby preventing thermal runaway of cylindrical batteries 1. In order to allow cooling plate 5 to effectively prevent the induction of thermal runaway, duct gap 6 is provided between heat-absorption plate portion 5A of cooling plate 5 and discharge surface 3B of battery block 3. Duct gap 6 reduces impact of the discharges by causing the discharges ejected from the discharge valve to diffuse. Widened duct gap 6 more effectively reduces the impact of the discharges. Therefore, duct gap 6 has a width, for example, 2 mm or more, and preferably 3 mm or more. However, duct gaps 6 increase overall length of battery module 100, and each duct gap 6 has a width, for example, 15 mm or less, and preferably 10 mm or less. The pressure and temperature of the discharges ejected from the discharge valve depend on the dimensions and the characteristics of cylindrical battery 1. Therefore, the width of duct gap 6 is optimally determined, taking into consideration the dimensions and the characteristics of cylindrical battery 1, dimensions required of battery module 10, and others.

Heat-absorption plate portion 5A of cooling plate 5 is placed on and thermally coupled to cooling surface 3A of battery block 3 via insulating heat-conductive sheet 8, thus being thermally coupled to bottom surfaces 11a of cylindrical batteries 1 while being insulated from lead plate 7 of battery block 3. Cooling plate 5 insulated from battery block 3 may be placed on and thermally coupled not short-circuiting plural divided lead plates 7 having difference potentials. Insulating heat-conductive sheet 8 is an insulating sheet with high heat conductivity, and preferably has a thickness ranging, for example, from 0.2 mm to 5 mm. Insulating heat-conductive sheet 8 is sandwiched between battery block 3 and cooling plate 5 while being locally compressed, serving as a layer having one surface contacting cooling surface 3A of battery block 3 and an opposite surface contacting a surface of cooling plate 5. Insulating heat-conductive sheet 8 may be made of a sheet with high heat conductivity, such as a flexible sheet including alumina particles or other heat-conductive particles bound together with a binder; and a silicone resin sheet, among others. Insulating heat-conductive sheet 8 may have a more efficient heat-conductive property by being coated with heat-conductive paste, such as silicone oil, on a surface thereof.

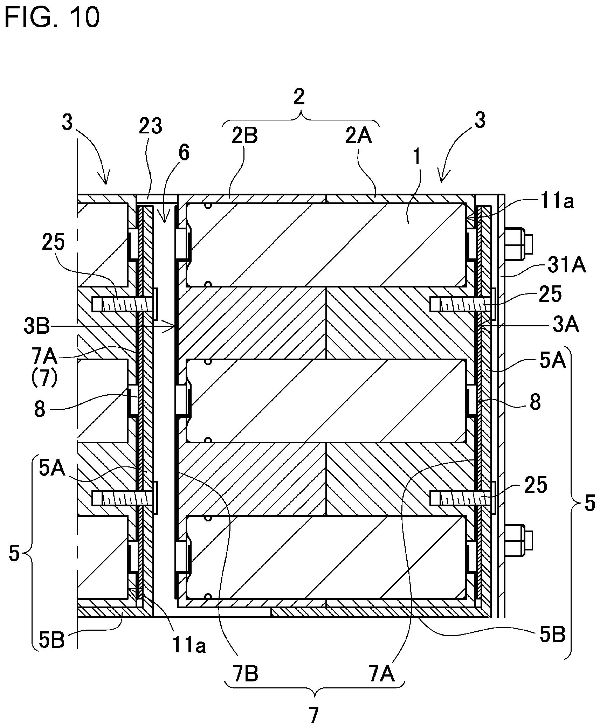

Cooling plate 5 is fixed to cooling surface 3A of battery block 3 with insulating heat-conductive sheet 8 sandwiched between cooling plate 5 and cooling surface 3A. In FIGS. 8 and 10, locking screws 25 are screwed into battery holder 2 of battery block 3 through cooling plate 5 so as to fix cooling plate 5 to battery block 3 with insulating heat-conductive sheet 8 sandwiched. Cooling plate 5 may be insulated from an electrically-conductive portion of battery block 3 by being screwed to battery holder 2 molded out of the insulating plastic material. Battery blocks 3 are fixed to respective cooling plates 5 and may be assembled by being connected linearly to one another with respective cooling plates 5 fixed. This configuration advantageously allows battery module 100 including battery blocks 3 to be assembled efficiently while securely and tightly coupling each cooling plate 5 to the surface of battery block 3 to provide a preferable thermal coupling.

In battery module 100 including cooling plates 5, as illustrated in FIG. 5, cooling plates 5 each disposed over cooling surface 3A in duct gap 6 are arranged to allow heat-dissipation plate portions 5B to be flush with one another. As illustrated in FIG. 3, heat-dissipation plate portions 5B flush with one another may be thermally coupled to planar active cooling device 40 configured to forcibly cool heat-dissipation plate portions 5B. Cooling plates 5 may be cooled efficiently with active cooling device 40 that provides the forced cooling, for example, through internal circulation of a cooling refrigerant. Active cooling device 40 provides forced cooling by being provided with plural radiating fins (not illustrated) at a surface (a bottom surface in FIG. 3) opposite from a surface thereof placed on heat-dissipation plate portions 5B. The active cooling device with the radiating fins effectively cools heat-dissipation plate portions 5B by having forced airflow through the radiating fins. Active cooling device 40 may cool cooling plates 5 by having increased latent heat as a thick metal plate to absorb heat energy by itself.

### Outer Case 30

Outer case 30 accommodates battery assembly 4 therein. Outer case 30 shown in the exploded perspective views of FIGS. 4 and 5 includes a pair of end-surface plates 31 disposed on at opposite end surfaces of battery assembly 4, side plates 32 that are disposed on opposite side surfaces of battery assembly 4 and are connected to sides of each end-surface plate 31, bottom plate 33 disposed at on bottom surface of battery assembly 4, and a top cover (not illustrated).

End-surface plates 31 include first end-surface plate 31A disposed on one of the end surfaces of battery assembly 4 (the right one in FIG. 4) and second end-surface plate 31B disposed at another end surface of battery assembly 4 (the left one in FIG. 4), that is to say, on discharge surface 3B. First end-surface plate 31A is placed on and thermally coupled to cooling surface 3A of battery block 3 via cooling plate 5. First end-surface plate 31A is a metal plate disposed on a surface of cooling plate 5 and is fixed at four corners of first end-surface plate 31A to fixing bolts 34 of bent pieces 32A of side plates 32 via nuts 35.

Second end-surface plate 31B includes inner plate 36 disposed over discharge surface 3B of battery assembly 4 to provide duct gap 6 between inner plate 36 and discharge surface 3B; and outer plate 37 disposed externally on inner plate 36. Inner plate 36 includes two ribs 38A and 38B extending widthwise and projecting toward outer plate 37. Two ribs 38B and 38A are provided at a lower edge and an upper part of inner plate 36, respectively. An installation space for circuit board 15 is provided between two ribs 38A and 38B. Inner plate 36 further includes rib 38C extending perpendicularly from a midpoint of upper rib 38A. Terminal spaces 18 are provided on opposite sides of rib 38C in which positive electrode terminal 16 and negative electrode terminal 17 are disposed, respectively. Circuit board 15 has a circuit, such as a protection circuit that controls charging and discharging of cylindrical batteries 1, mounted thereon. Outer plate 37 includes frame 37A and cover plate 37B closing an opening of frame 37A. Outer plate 37 is disposed over discharge surface 3B of battery assembly 4 to provide duct gap 6 between outer plate 37 and discharge surface 3B. Similarly to inner plate 36, Outer plate 37 is fixed at four corners of outer plate 37 to fixing bolts 34 of bent pieces 32A of side plates 32 via nuts 35.

Side plate 32 A is formed by pressing a metal plate to include two reinforcing ribs 32B extending longitudinally. Each side plate 32 further includes bent pieces 32A formed by bending end borders of the metal plate inward. Bent pieces 32A has outwardly projecting fixing bolts 34 fixed for end-surface plates 31 to be fixed. Each side plate 32 has apertures 32C therein for locking screws 26 to fix battery blocks 3 at their predetermined positions. Locking screws 26 are inserted into apertures 32C of side plate 32 and screwed into battery holders 2 of battery blocks 3, thus arranging battery blocks 3 at their predetermined positions.

Bottom plate 33 is an insulator with a plate shape made of, for example, plastic and has exposure openings 33A therein guiding heat-dissipation plate portions 5B of cooling plates 5 inward by fitting. Bottom plate 33 has a thickness smaller than or equal to the thickness of each heat-dissipation plate portion 5B, Bottom plate 33 allows heat-dissipation plate portions 5B flush with one another to securely contact a surface of active cooling device 40. For example, bottom plate 33 may be joined to bottom surfaces of battery blocks 3 with, e.g., a double-sided adhesive tape.

The top cover is an insulator with a plate shape made of, for example, plastic, similarly to bottom plate 33, and is securely joined to a top surface of battery assembly 4 with, e.g., a double-sided adhesive tape, thus serving as a cover at a top of outer case 30.

### INDUSTRIAL APPLICABILITY

A battery module according to the present invention is suitably usable for a power supply installed in a motor-driven vehicle or a motor-driven heavy machine to supply a drive motor with power.

### REFERENCE MARKS IN THE DRAWINGS

100 battery module
1 cylindrical battery
2 battery holder
2A, 2B holder unit
3 battery block
3A cooling surface
3B discharge surface
4 battery assembly
5 cooling plate
5A heat-absorption plate portion
5B heat-dissipation plate portion
6 duct gap
7 lead plate
7A bottom-surface connection lead plate
7B sealing-plate connection lead plate
7C series-connection lead plate
8 insulating heat-conductive sheet
10 parallel block
11 outer package
11a bottom surface
12 sealing plate
13 opening
14 crimp projection
15 circuit board
16 positive electrode terminal
17 negative electrode terminal
18 terminal space
21 cylindrical portion
22 fitting portion
23 gap formation rib
25 locking screw
26 locking screw
30 outer case
31 end-surface plate
31A first end-surface plate
31B second end-surface plate
32 side plate
32A bent piece
32B stiffening rib
32C aperture
33 bottom plate
33A exposure opening
34 fixing bolt
35 nut
36 inner plate
37 outer plate
37A frame
37B cover plate
38A, 38B, 38C rib
40 active cooling device
90 battery module
90A right battery module
90B left battery module
91 cylindrical battery
92 heat-conductive frame
92A right heat-conductive frame
92B left heat-conductive frame
93 cooling device

## Claims

1. A battery module comprising:
a battery assembly including a plurality of battery blocks including respective groups of cylindrical batteries having bottom surfaces flush with respective planes, the plurality of battery blocks being connected to one another in an axial direction of each of the cylindrical batteries; and
cooling plates configured to cool the respective groups of the cylindrical batteries of the plurality of battery blocks, wherein
the plurality of battery blocks have:
respective cooling surfaces constituted by respective one end surfaces of the plurality of battery blocks, the bottom surfaces of the respective groups of the cylindrical batteries being flush with the respective planes on the respective one end surfaces of the plurality of battery blocks; and
respective discharge surfaces constituted by respective opposite end surfaces of the plurality of battery blocks, the respective groups of the cylindrical batteries including respective discharge valves having respective openings at the respective opposite end surfaces of the plurality of battery blocks,
the battery assembly includes a duct gap for discharge between adjoining battery blocks out of the plurality of battery blocks such that a cooling surface of one of the adjoining battery blocks out of the respective cooling surfaces of the plurality of battery blocks faces, across the duct gap, a discharge surface of another of the adjoining battery blocks out of the respective discharge surfaces of the plurality of battery blocks,
the cooling plates have respective L-shapes including respective heat-absorption plate portions and respective heat-dissipation plate portions connected perpendicularly and unitarily to the respective heat-absorption plate portions,
one of the respective heat-absorption plate portions of one of the cooling plates is disposed on and thermally coupled to the cooling surface of the one of the adjoining battery blocks,
the respective heat-dissipation plate portions are disposed on an outer surface of the battery assembly, and
a gap functioning as the duct gap is provided between the one of the respective heat-absorption plate portions and the discharge surface of the another of the adjoining battery blocks of the battery assembly.

2. The battery module according to claim 1, wherein
the battery assembly includes a plurality of duct gaps including the duct gap of the battery assembly, and
the cooling plates are disposed on the respective cooling surfaces in the plurality of duct gaps, the respective heat-dissipation plate portions of the cooling plates being flush with one another.

3. The battery module according to claim 1 or 2, further comprising:
a lead plate electrically connected to bottom surfaces of one group of cylindrical batteries out of the respective groups of the cylindrical batteries of the plurality of battery blocks; and
an insulating heat-conductive sheet is disposed between the lead plate and the one of the respective heat-absorption plate portions, wherein
the one of the respective heat-absorption plate portions is thermally coupled to the bottom surfaces of the one group of the cylindrical batteries via the insulating heat-conductive sheet and the lead plate.

4. The battery module according to any one of claims 1 to 3, wherein
the plurality of battery blocks include respective battery holders positioning the respective groups of the cylindrical batteries of the plurality of battery blocks such that the respective groups of the cylindrical batteries are parallel to one another, and
the duct gap of the battery assembly is provided between the battery blocks through one of the respective battery holders.

5. The battery module according to any one of claims 1 to 4, further comprising
an active cooling device thermally coupled to the respective heat-dissipation plate portions.

6. The battery module according to any one of claims 1 to 5, further comprising
an outer case accommodating the battery assembly therein, wherein
the outer case includes:
a pair of end-surface plates disposed at opposite end surfaces of the battery assembly, respectively;
side plates disposed at respective opposite sides of the battery assembly, each of the side plates being connected to corresponding one sides of both sides of the end-surface plates; and
a bottom plate disposed on a bottom surface of the battery assembly,
the bottom plate has exposure openings therein for the respective heat-dissipation plate portions, and
each of the respective heat-dissipation plate portions are exposed through a corresponding one of the exposure openings.

7. The battery module according to claim 6, wherein
the plurality of battery blocks include respective battery holders positioning the respective groups of the cylindrical batteries such that the respective groups of the cylindrical batteries are parallel to one another, and
the side plates are fixed to the respective battery holders.

8. The battery module according to any one of claims 1 to 7, wherein
the plurality of battery blocks include respective battery holders positioning the respective groups of the cylindrical batteries such that the respective groups of the cylindrical batteries are parallel to one another, and
the cooling plates are fixed to the respective battery holders.

9. The battery module according to any one of claims 1 to 8, wherein each of the battery blocks includes a plurality of parallel blocks each including plural cylindrical batteries of a corresponding one group of the respective groups of the cylindrical batteries such that the plural cylindrical batteries are connected in parallel to one another, the plurality of parallel blocks being connected in series to one another.

10. The battery module according to any one of claims 1 to 9, wherein the adjoining battery blocks of the battery assembly are connected in series to each other.
